# EUROPEAN PATENT APPLICATION

(11) **EP 1 855 186 A2**
(43) Date of publication of application: **14.11.2007**
(21) Application number: 07107609.5
(22) Date of filing: 07.05.2007
(51) Int. Cl.: G06F 3/048

(54) **System and method for intelligent user interface**

(30) Priority: 10.05.2006 US 382666; 09.04.2007 KR 20070034769
(71) Applicant: Samsung Electronics Co., Ltd., Suwon-si Gyeonggi-do (KR)
(72) Inventor: Sakhpara, Ketul c/o Samsung Electronics Co., Ltd., Gyeonggi-do (KR)
(74) Representative: Zimmer, Franz-Josef

(57) **Abstract**

A system for an intelligent user interface is provided. The system includes a handset, a user activity logger, a user activity analyzer, and a user interface composer. The user activity logger logs a user activity for the handset, a time of the user activity, and a geographic location of the user activity. The user activity analyzer analyzes the logged user activity, the logged time of the user activity, and the logged geographic location of the user activity. The user interface composer composes a user interface based on the analyzed user activity, the analyzed time of the user activity, and the analyzed geographic location of the user activity. The user interface composer also displays the composed user interface on the handset at a later time related to the analyzed time of the user activity when the handset is at a geographic location related to the analyzed geographic location of the user activity.

## Description

The present disclosure is directed to user interfaces, and more particularly, to an intelligent user interface.

A pull method transmitting a requesting message by a handset requires a handset user to initiate a request to monitor traffic conditions, the weather, or other information, and the network for the handset responds to the request. A push method receiving a requesting message by the handset requires a network for a handset to bombard the handset with information based on the location of the handset or preferences set by the handset user. Both methods result in the sending of information on a reactive basis.

It is the object of the present invention to provide a system and method for an intelligent user interface considering the user's convenience.

This object is solved by the subject matter of the independent claims.

Preferred embodiments are defined in the dependent claims.

In one embodiment, a system for an intelligent user interface is provided. The system includes a handset, a user activity logger, a user activity analyzer, and a user interface composer. The user activity logger logs a user activity for the handset, a time of the user activity, and a geographic location of the user activity. The user activity analyzer analyzes the logged user activity, the logged time of the user activity, and the logged geographic location of the user activity. The user interface composer composes a user interface based on the analyzed user activity, the analyzed time of the user activity, and the analyzed geographic location of the user activity. The user interface composer also displays the composed user interface on the handset at a specified time related to the analyzed time of the user activity when the handset is at a geographic location related to the analyzed geographic location of the user activity.

In another embodiment, a method for an intelligent user interface is provided. The method includes logging a user activity for a handset and a time of the user activity. The method also includes composing a user interface based on the logged user activity and the logged time of the user activity. Additionally, the method includes displaying the composed user interface on the handset at a specific time related to the logged time of the user activity.

In yet another embodiment, a system for an intelligent user interface is provided. The system includes a handset and a network server to log a user activity for the handset and a geographic location of the user activity. The network server also composes a user interface based on the logged user activity and the logged geographic location of the user activity. Additionally, the handset displays the composed user interface when the handset is adjacent a specified geographic location related to the logged geographic location of the user activity.

These and other features and advantages will be more clearly understood from the following detailed description taken in conjunction with the accompanying drawings and claims.

For a more complete understanding of the present disclosure and the advantages thereof, reference is now made to the following brief description, taken in connection with the accompanying drawings and detailed description, wherein like reference numerals represent like parts.

Figure 1 illustrates a system suitable for implementing the several embodiments of the present disclosure.

Figure 2 is a flow chart of a method for an intelligent user interface according to an embodiment of the present disclosure.

Figure 3 illustrates an exemplary mobile handset system suitable for implementing the several embodiments of the disclosure.

Figure 4 illustrates an exemplary general purpose computer system suitable for implementing the several embodiments of the disclosure.

It should be understood at the outset that although an exemplary implementation of one embodiment of the present disclosure is illustrated below, the present system may be implemented using any number of techniques, whether currently known or in existence. The present disclosure should in no way be limited to the exemplary implementations, drawings, and techniques illustrated below, including the exemplary design and implementation illustrated and described herein, but may be modified within the scope of the appended claims along with their full scope of equivalents.

A pull method transmitting a requesting message may require a handset user to navigate through numerous menus every day, perhaps at similar times, to initiate a request, for example, to monitor traffic conditions. A push method receiving a requesting message may bombard a handset with unwanted information, such as restaurant listings every time that a user drives past a downtown area filled with restaurants, even though the user has no present pattern of dining while in that area or at that time of day. Neither the push method nor the pull method intelligently predicts the activity of a user based on prior usage patterns.

Embodiments of the present disclosure log user activities on a handset, as well as the time and location of the user activities, analyze the logged information to compose user interfaces. The composed user interfaces are displayed to the handset at a time related to the time of a user's prior activity when the handset is at a location related to the location of the user's prior activity. The composed user interfaces may be a modification of the existing user interfaces, for example, the existing menus and icons may be rearranged to be more useable in the composed user interfaces. Thereafter, the network intelligently anticipates a user activity based on patterns of user activity, and facilitates use of the handset by the user. For example, the network may display to the user interface on the handset an icon representing a menu shortcut to request traffic conditions when the handset is approaching the location where a user typically requests traffic conditions.

In some embodiments, the menu may appear at a time shortly before the user typically requests traffic conditions. In another example, the composed user interfaces may have moved the menu for requesting restaurant listings from a location five menu items deep on the user interface to the first menu item displayed on the handset when the handset is approaching the location where a user typically requests restaurant listings. The composed user interfaces might be displayed on the handset at a time, for example, shortly before the user typically requests restaurant listings.

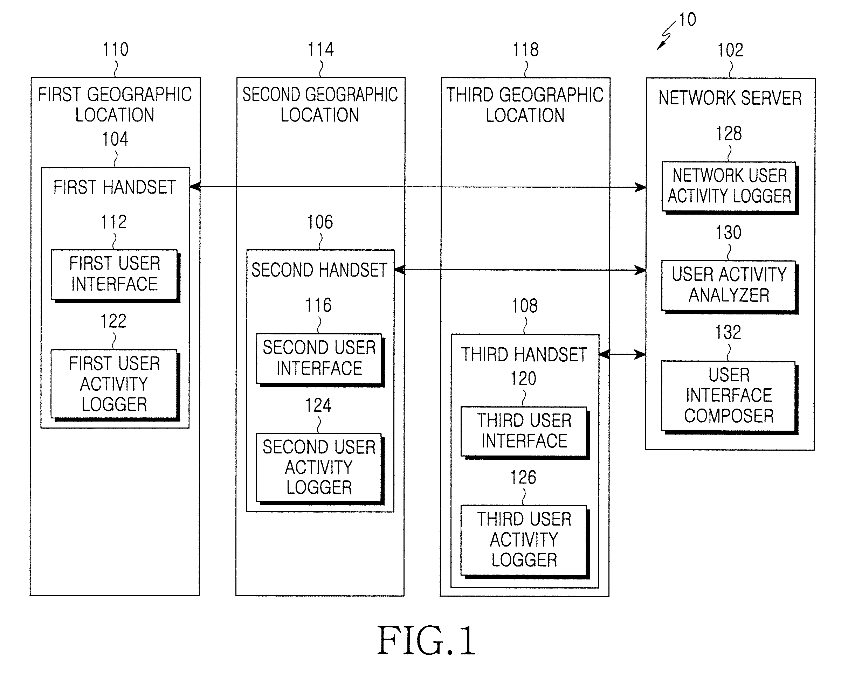

Turning now to Figure 1, a system 10 for intelligent user interface is depicted. The system 10 depicts a network server 102 that communicates with three handsets, a first handset 104, a second handset 106, and a third handset 108. Although only three handsets are shown, the network server 102 may communicate with any number of handsets. The handsets 104, 106, and 108 are handheld mobile electronic devices, such as a mobile phone, a personal digital assistant, a portable computer, a tablet computer, or a laptop computer. The network server 102 may be any general purpose computer, such as described below.

Each handset may be located at a geographic location, and each handset may include a user interface to enable the user of each handset to communicate with the network server 102. The geographic location of a handset may be determined by a global positioning system, or by a triangulation method, for example. A global positioning system determines a geographic location on the surface of the earth by comparing radio signals from multiple satellites. A triangulation method determines a geographic location on the surface of the earth by comparing radio signals from multiple locations.

Each handset may include a user interface to control the operation, input, and output of the handset. The first handset 104 may be located at a first geographic location 110, and the first handset 104 may include a first user interface 112. Likewise, the second handset 106 may be located at a second geographic location 114, and the second handset 106 may include a second user interface 116. Similarly, the third handset 108 may be located at a third geographic location 118, and the third handset 108 may include a third user interface 120.

In some embodiments of the present disclosure, a handset may include a user activity logger, which is a component to log a user activity on the handset. A user activity is an action on a handset taken by a user. When a user activity logger logs a user activity on a handset, the user activity logger creates a user log that includes a listing of user activities. For example, Figure 1 depicts the first handset 104 including a first user activity logger 122, the second handset 106 including a second user activity logger 124, and the third handset 108 including a third user activity logger 126. In some embodiments of the present disclosure, the network server 102 may include a user activity logger to log, track, or maintain data related to user activity on each handset. For example, Figure 1 depicts the network server 102 including a network user activity logger 128. The system 10 for an intelligent user interface has the option of including a user activity logger, the activity analyzer, the user interface composer, or other systems, on various components, such as all being on each handset or on the network server 102, or portions or combinations may be on both. If a user activity logger is on a handset and bandwidth is at a premium, the handset may send a user log to the network server 102 during a period of low activity because the handset may not have sufficient memory to store a large amount of logged user activities.

The network server 102 may also include a user activity analyzer, which is a component to analyze a user log created by a user activity logger. Additionally, the network server 102 may include a user interface composer, which is a component to compose a user interface based on an analyzed user log. For example, Figure 1 depicts the network server 102 including a user activity analyzer 130 and a user interface composer 132. A composed user interface includes the specifically composed aspects of a handset which may be used by a user to facilitate access to and use of specific commands and mechanisms to control the operation and use of the handset. A composed user interface may include menus, such as the content, order-organization of the menus, and/or icons that facilitate specified options. The composed user interfaces may promote menu options at more readily accessible locations in comparison to a previous less readily accessible location of these items.

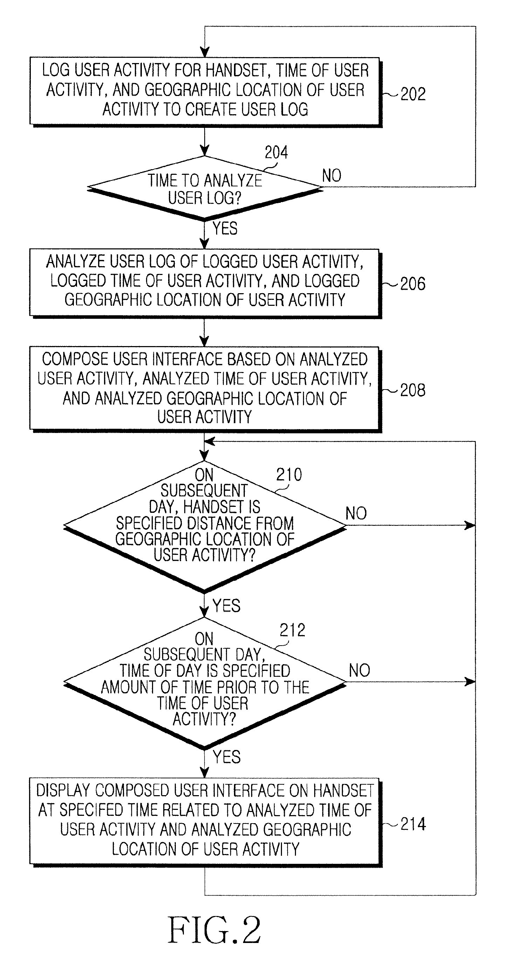

Figure 2 is a flow chart of a method for an intelligent user interface according to an embodiment of the present disclosure. In box 202, a user activity logger logs a user activity for a handset, a time of the user activity, and a geographic location of the user activity to create a user log. For example, the first user activity logger 122 logs a request for traffic conditions for first handset 104, a time of the user activity, such as 8:00 in the morning, and the first geographic location 110 of the user activity, such as the home residence for the user, to create a user log.

In box 204, a user activity analyzer determines whether it is time to analyze a user log created by a user activity logger. In some embodiments of the present disclosure, the time to analyze the user log may occur once each day, such as after the handset sends the user log to the network server 102 during a period of low activity. In other embodiments of the present disclosure, because the logging and analysis may be executed entirely on the handset or at other times on the network server 102, the log may be analyzed in an ongoing process or at different time intervals, such as after the user activity logger logs each user activity.

If the user activity analyzer 130 determines that it is not time to analyze a user log created by a user activity logger, the method returns to box 202 to continue to log user activity. For example, prior to midnight the user activity analyzer 130 determines that it is not time to analyze a user log created by the first user activity logger 122 because the first user activity logger 122 does not send the user log of user activities to the network server 102 until midnight. If the user activity analyzer 130 determines that it is time to analyze a user log created by a user activity logger, the method proceeds to box 206 to analyze the user log. For example, at midnight the user activity analyzer 130 determines it is time to analyze a user log created by the first user activity logger 122 and sent by the first user activity logger 122 to the network server 102.

In box 206, the user activity analyzer 130 analyzes the user log of the logged user activity, the logged time of the user activity, and the logged geographic location of the user activity. For example, the user activity analyzer 130 analyzes the user log which indicates that the user requested traffic conditions, the request occurred at 8:00 in the morning, and the request originated from the first geographic location 110, the home residence of the user. In another example, the user activity analyzer 130 analyzes the user log which indicates that a user requested restaurant listings, the request occurred at 11:45 in the morning, and the request originated from the third geographic location 118, the downtown area near the workplace of the user. In yet another example, the user activity analyzer 130 analyzes a user log which indicates that a user requested traffic conditions, the request occurred at 5:00 in the afternoon, and the request originated from the second geographic location 114, the workplace of the user. In one more example, the user activity analyzer 130 analyzes a user log which indicates that a user requested to set an alarm clock, the request occurred at 9:00 in the evening, and the request originated from the first geographic location 110, the home residence of the user.

In box 208, the user interface composer 132 composes a user interface based on an analyzed user activity, an analyzed time of user activity, and an analyzed geographic location of user activity. For example, the user interface composer 132 composes a user interface based on a request for traffic conditions, with the request occurring at 8:00 in the morning, and the request originating from the first geographic location 104, the home residence of the user. In another example, the user interface composer 132 composes a user interface based on a request for restaurant listings, with the request occurring at 11:45 in the morning, and the request originating from the third geographic location 118, the downtown area near the workplace of the user. In yet another example, the user interface composer 132 composes a user interface based on a request for traffic conditions, with the request occurring at 5:00 in the afternoon, and the request originating from the second geographic location 114, the workplace of the user. In one more example, the user interface composer 132 composes a user interface based on a request to set an alarm clock, with the request occurring at 9:00 in the evening, and the request originating from the first geographic location 110, the home residence of the user.

In box 210, the user interface composer 132 determines on a subsequent day whether a handset is a specified distance from a geographic location of a user activity. If the user interface composer 132 determines on a subsequent day that a handset is a specified distance from a geographic location of a user activity, the method proceeds to box 212 to check for a time of day. For example, the third geographic location 118 may be a downtown area near the workplace of the user, from which the user requested restaurant listings. For this example, if the user interface composer 132 determines on a subsequent day that the first handset 104 is within 100 yards of the third geographic location 118, the method proceeds to box 212 to check for a time of day. If the user interface composer 132 determines on a subsequent day that a handset is not a specified distance from a geographic location of a user activity, the method continues in box 210 to check for a geographic location. For example, the first geographic location 110 may be where the user requested traffic conditions and where the user requested to set an alarm clock, the second geographic location 114 may be where the user requested traffic conditions, and the third geographic location 118 may be where the user requested restaurant listings. For this example, if the user interface composer 132 determines on a subsequent day that the first handset 104 is not within 100 yards the third geographic location 118, nor within 100 yards from the first geographic location 110 or the second geographic location 114, the method returns to box 210 for check for a geographic location.

In box 212, the user interface composer 132 determines on a subsequent day whether the time of day is a specified amount of time prior to the time of the user activity. If the user interface composer 132 determines on a subsequent day that the time of day is a specified amount of time prior to a time of a user activity, the method proceeds to box 214 to display a composed user interface on a handset. For example, the user interface composer 132 may determine on a subsequent day that the time of day is within fifteen minutes prior to the time of a request to set an alarm clock. For this example, the method proceeds to box 214 to display a composed user interface to a handset to facilitate setting an alarm clock, on so on for other times and user interfaces. Fifteen minutes prior to the time of a request is only an example of a specified amount of time prior to a time of a user activity, as the specified amount of time prior to a time of a user activity may be ten minutes, thirty minutes, or any other amount of time. Furthermore, this time may be a window such as 30 minutes before until 15 minutes after, for example, the 9:00 expected time for the user to set the alarm clock. Other time intervals may be used and are within the scope of the present disclosure. If the user interface composer 132 determines on a subsequent day that the time of day is not a specified amount of time prior to a time of a user activity, the method returns to box 210 to check for a geographic location. For example, the user interface composer 132 may determine on a subsequent day that the time of day is not within fifteen minutes prior to the time of the request to set an alarm clock, the time of the request for restaurant listings, nor the times of the requests for traffic conditions. For this example, the method returns to box 210 to check for a geographic location.

In box 214, the user interface composer 132 displays a composed user interface on a handset at a specified time related to an analyzed time of user activity and an analyzed geographic location of user activity. For example, the user interface composer 132 may display a composed user interface on the first handset 104 to facilitate setting an alarm clock at 8:45 in the evening, fifteen minutes prior to the time of day that the user previously set the alarm clock. In this example, the user interface composer 132 may display a composed user interface provided that the first handset 104 is within 100 yards of the first geographic location 110, the home residence of the user, where the user requested to set the alarm clock. In another example, the user interface composer 132 may display a composed user interface on the first handset 104 to facilitate requesting traffic conditions at 7:45 in the morning, fifteen minutes prior to the time of day that the user requested traffic conditions. In this example, the user interface composer 132 may display a composed user interface provided that the first handset 104 is within 100 yards of the first geographic location 110, the home residence of the user where the user requested traffic conditions. In yet another example, the user interface composer 132 may display a composed user interface on the third handset 108 to facilitate requesting a list of restaurants at 11:45 in the morning, fifteen minutes prior to the time of day that the user requested to list restaurants. In this example, the user interface composer 132 may display a composed user interface provided that the third handset 108 is within 100 yards of the third geographic location 118, the downtown area near the workplace of the user where the user requested to list restaurants. In one more example, the user interface composer 132 displays a composed user interface on the second handset 106 to facilitate requesting traffic conditions at 4:45 in the evening, fifteen minutes prior to the time of day that the user requested traffic conditions the previous day. The composed user interfaces are displayed provided that the first handset 104 is within 100 yards of the relevant geographic location. Then the method returns to box 210 to check for a geographic location.

During the subsequent day, the method may continue in a loop checking for geographic locations, checking for times of day, and displaying composed user interfaces as appropriate. Simultaneous to the method continuing in this loop, the method may log user activity during the subsequent day, creating a user log that may be analyzed after the subsequent day. For example, user activity that may be logged on Monday may be analyzed on Tuesday and then related to the displaying of composed user interfaces on a handset on Tuesday. User activity that may be logged on Tuesday may be combined in a user log with user activity logged on Monday. The user log of combined user activities may be analyzed and then related to the displaying of composed user interfaces on a handset on Wednesday.

As days of user activity are logged, the user activity analyzer 130 may become more accurate in anticipating future user activity. For example, if a user requests to set an alarm clock at 9:00 in the evening during weeknights and at 11:00 in the evening on weekends when the handset is at a number of geographic locations, the user activity analyzer 130 may display a composed user interface on the handset to facilitate setting an alarm clock at 8:45 in the evening during weeknights and at 10:45 in the evening on weekends, regardless of the geographic location for the handset. In this example, when the user takes the handset to a geographic location distant from the home residence for the user, the user activity analyzer 130 may display a composed user interface on the handset to facilitate setting an alarm clock at 10:45 in the evening on weekends. In this same example, when the user takes the handset to a geographic location distant from the workplace of the user, the user activity analyzer 130 may elect to not display a composed user interface on the handset to facilitate requesting restaurant listings. In another example, if during a number of different times of the day a user requests a list of motion pictures playing at a specific theater when the handset is within 100 yards of the theater, the user activity analyzer 130 may display a composed user interface to facilitate requesting a list of motion pictures playing at the specific theater on the handset when the handset is within 100 yards of the specific theater, regardless of the time of the day.

In addition to analyzing user activity based upon the day of the week, the user activity analyzer 130 may also analyze user activity based upon the day of the month, such as the first day of a month, or the third Thursday of a month, or different intervals. The user activity analyzer 130 analyzes user logs based on patterns of user activity. For example, based on analysis of a user log that includes requests for traffic conditions around 8:30 in the morning during all five of the five most recent weekdays, the user activity analyzer 130 may elect to display a composed user interface to facilitate a weekday morning request for traffic conditions. In another example, based on an analysis of a user log that includes requests for traffic conditions around 8:30 in the morning during only five of the ninety most recent weekdays the user activity analyzer 130 may elect to not display a composed user interface to facilitate a weekday morning request for traffic conditions. Even if a user log includes requests for traffic conditions around 8:30 in the morning during only five of the ninety most recent weekdays, the user activity analyzer 130 may still elect to display a composed user interface to facilitate a weekday morning request for traffic conditions. In response the user may select or not select options displayed by the composed user interface, options to facilitate a weekday morning request for traffic conditions or to facilitate any other request.

In some embodiments of the present disclosure, when the user interface composer 132 displays a composed user interface on a handset, the composed user interface displayed on the handset may include a user menu item associated with the user activity that may be moved from a less readily accessible location in a user interface on the handset to a more readily accessible location in the user interface on the handset. A user menu is a list from which the user may select an operation to be performed. This selection of an operation is often done with a pointing device under a graphical user interface, key selection, touch-screen, or otherwise. For example, the user interface composer 132 displays on the first handset 104 a composed user interface that includes a user menu for requesting traffic conditions. The user menu for requesting traffic conditions may be moved from a previous less readily accessible location in a user interface on the first handset 104 to a more readily accessible location in the user interface on the first handset 104. Previously, the user may have traversed five menus to access the user menu for requesting traffic conditions at the less readily accessible location. Upon receiving the composed user interface, the user may traverse only one menu and the menu item may be at the top to access the user menu for requesting traffic conditions at the more readily accessible location. In another example, when the user regularly calls a telephone number, such as the telephone number for the home residence of the user, at a specified time while at a specified location, the user interface may move the telephone number for the home residence of the user to a more readily accessible location.

In some embodiments of the present disclosure, a user interface displays an icon associated with a user activity on the handset. When the icon is selected, some action is performed such as opening a directory, initiating a file transfer, or navigating to a web site, such as a web site for traffic conditions. For example, the user interface composer 132 may display a composed user interface including a user menu on the first handset 104, and the user menu may display an icon associated with setting an alarm clock in the first user interface 112 on the first handset 104. If the user selects the icon associated with setting an alarm clock, the first user interface 112 may retrieve an alarm clock setting window.

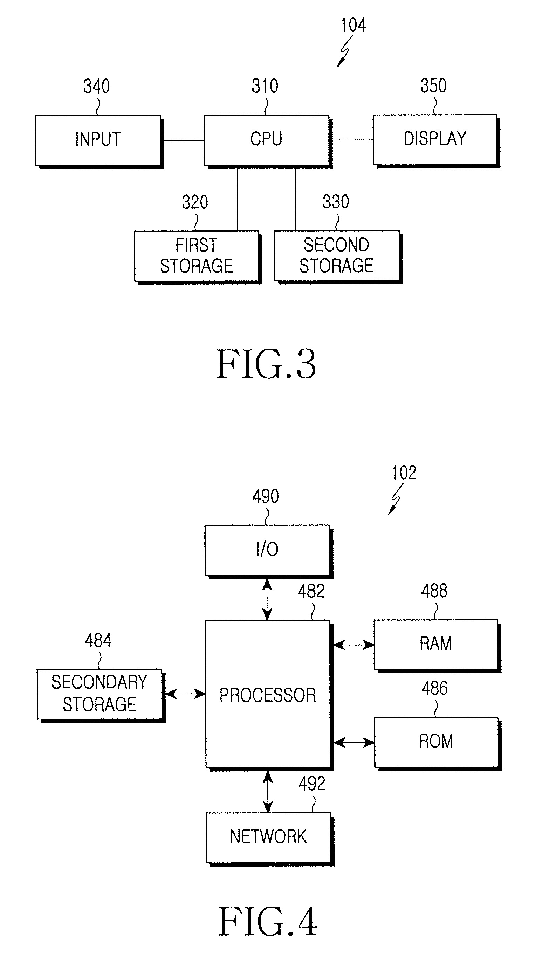

The system described above may be implemented on any handheld mobile electronic device, such as the first handset 104, as is well known to those skilled in the art. An exemplary first handset 104 for implementing one or more embodiments disclosed herein is illustrated in Figure 3. The first handset 104 includes a processor 310 (which may be referred to as a central processor unit or CPU) that is coupled to a first storage area 320, a second storage area 330, an input device 340 such as a keypad, and an output device such as a display screen 350. The input device 340 and the display screen 350 may be collectively known as a user interface, such as the first user interface 112.

The processor 310 may be implemented as one or more CPU chips and may execute instructions, codes, computer programs, or scripts that it accesses from the first storage area 320 or the second storage area 330. The first storage area 320 may be a non-volatile memory such as flash memory. The second storage area 330 may be firmware or a similar type of memory.

The network server 102 described above may be implemented on any general-purpose computer with sufficient processing power, memory resources, and network throughput capability to handle the necessary workload placed upon it. Figure 4 illustrates a typical, general-purpose computer system suitable for implementing one or more embodiments disclosed herein. The network server 102 includes a processor 482 (which may be referred to as a central processor unit or CPU) that is in communication with memory devices including secondary storage 484, read only memory (ROM) 486, random access memory (RAM) 488, input/output (I/O) 490 devices, and network connectivity devices 492. The processor may be implemented as one or more CPU chips.

The secondary storage 484 is typically comprised of one or more disk drives or tape drives and is used for non-volatile storage of data and as an over-flow data storage device if RAM 488 is not large enough to hold all working data. Secondary storage 484 may be used to store programs which are loaded into RAM 488 when such programs are selected for execution. The ROM 486 is used to store instructions and perhaps data which are read during program execution. ROM 486 is a non-volatile memory device which typically has a small memory capacity relative to the larger memory capacity of secondary storage. The RAM 488 is used to store volatile data and perhaps to store instructions. Access to both ROM 486 and RAM 488 is typically faster than to secondary storage 484.

I/O 490 devices may include printers, video monitors, liquid crystal displays (LCDs), touch screen displays, keyboards, keypads, switches, dials, mice, track balls, voice recognizers, card readers, paper tape readers, or other well-known input devices. The network connectivity devices 492 may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) and/or global system for mobile communications (GSM) radio transceiver cards, and other well-known network devices. These network connectivity 492 devices may enable the processor 482 to communicate with an Internet or one or more intranets. With such a network connection, it is contemplated that the processor 482 may receive information from the network, or may output information to the network in the course of performing the above-described method steps. Such information, which is often represented as a sequence of instructions to be executed using processor 482, may be received from and outputted to the network, for example, in the form of a computer data signal embodied in a carrier wave.

Such information, which may include data or instructions to be executed using processor 482 for example, may be received from and outputted to the network, for example, in the form of a computer data baseband signal or signal embodied in a carrier wave. The baseband signal or signal embodied in the carrier wave generated by the network connectivity 492 devices may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 482 executes instructions, codes, computer programs, scripts which it accesses from hard disk, floppy disk, optical disk (these various disk based systems may all be considered secondary storage 484), ROM 486, RAM 488, or the network connectivity devices 492.

As described above, the present invention provides a predictable user interface when the handset will be at a registered location at a registered time in the feature, thereby satisfying the user' convenience.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein, but may be modified within the scope of the appended claims. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as directly coupled or communicating with each other may be coupled through some interface or device, such that the items may no longer be considered directly coupled to each other but may still be indirectly coupled and in communication, whether electrically, mechanically, or otherwise with one another. Other examples of changes, substitutions, and alterations are ascertainable by one skilled in the art and could be made without departing from the scope disclosed herein.

## Claims

1. A system for an intelligent user interface, comprising:
a handset;
a user activity logger operable to log a user activity for the handset, a time of the user activity, and a geographic location of the user activity;
a user activity analyzer operable to analyze the logged user activity, the logged time of the user activity, and the logged geographic location of the user activity; and
a user interface composer operable to compose a user interface based on the analyzed user activity, the analyzed time of the user activity, and the analyzed geographic location of the user activity, wherein the user interface composer is further operable to display the composed user interface on the handset at a later time related to the analyzed time of the user activity and at a specified geographic location related to the analyzed geographic location of the user activity.

2. The system of claim 1, wherein the later time occurs on a subsequent day when the handset is a specified distance from the geographic location of the user activity.

3. The system of claim 1, wherein the later time occurs on a subsequent day a specified amount of time prior to the logged time of the user activity.

4. The system of one of claims 1 to 3, wherein the composed user interface displayed on the handset comprises a user menu item associated with the user activity that is moved from a less readily accessible location in a prior user interface in the handset to a more readily accessible location in the composed user interface in the handset.

5. The system of one of claims 1 to 3, wherein the composed user interface displayed on the handset includes an icon associated with the user activity.

6. The system of one of claims 1 to 5, wherein the handset is selected from a group consisting of a mobile phone, a personal digital assistant, and a portable computer.

7. The system of one of claims 1 to 6, wherein the geographic location of the user activity is determined by one of a triangulation method and a global positioning system.

8. A method for an intelligent user interface, comprising:
logging a user activity for a handset and a time of the user activity;
composing a user interface based on the logged user activity and the logged time of the user activity; and
displaying the composed user interface on the handset at a later time related to the logged time of the user activity.

9. The method of claim 8 further comprising:
analyzing the logged user activity and the logged time of the user activity to determine relationships between the logged user activity and the logged time to promote composing the user interface.

10. The method of claim 8, wherein the later time occurs on a subsequent day a specified amount of time prior to the logged time of the user activity.

11. The method of one of claims 8 to 10, wherein the composed user interface displayed on the handset comprises a user menu item associated with the user activity that is moved from a less readily accessible location in a prior user interface in the handset to a more readily accessible location in the composed user interface in the handset.

12. The method of one of claims 8 to 10, wherein the composed user interface displayed on the handset includes an icon associated with the user activity in a user interface in the handset.

13. The system of one of claims 8 to 12, wherein the handset is selected from a group consisting of a mobile phone, a personal digital assistant, and a portable computer.

14. A system for an intelligent user interface, comprising:
a handset; and
a network server operable to maintain a log of a user activity for the handset and a geographic location of the user activity, the network server is further operable to compose a user interface based on the logged user activity and the logged geographic location of the user activity, and wherein the handset is operable to display the composed user interface on the handset when the handset is adjacent a specified geographic location related to the logged geographic location of the user activity.

15. The system of claim 14, wherein the network server is further operable to analyze the logged user activity and the logged geographic location of the user activity to determine relationships between the logged user activity and the logged geographic location of the user activity to promote composition of the user interface.

16. The system of claim 14 or 15, wherein the handset is operable to display the composed user interface on the handset when the handset is at a specified geographic location related to the logged geographic location of the user activity on a subsequent day.

17. The system of one of claims 14 to 16, wherein the composed user interface displayed on the handset comprises a user menu item associated with the user activity that is moved from a less readily accessible location in a prior user interface in the handset to a more readily accessible location in the composed user interface in the handset.

18. The system of one of claims 14 to 16, wherein the composed user interface displayed on the handset includes an icon associated with the user activity in a user interface in the handset.

19. The system of one of claims 14 to 18, wherein the handset is selected from a group consisting of a mobile phone, a personal digital assistant, and a portable computer.

20. The system of one of claims 14 to 19, wherein the geographic location of the user activity is determined by one of a triangulation method and a global positioning system.
